# EUROPÄISCHE PATENTANMELDUNG

(11) **EP 1 283 220 A1**
(43) Veröffentlichungstag der Anmeldung: **12.02.2003**
(21) Anmeldenummer: 02016300.2
(22) Anmeldetag: 24.07.2002
(51) Int. Cl.: C08C 19/44

(54) **Gekoppelte und mit elektrophilen Gruppen modifizierte Dien-Polymere**

(30) Priorität: 06.08.2001 DE 10139304; 22.04.2002 DE 10217800
(71) Anmelder: Bayer Aktiengesellschaft, 51368 Leverkusen (DE)
(72) Erfinder: Grün, Michael, Dr., 53721 Siegburg (DE); Knauf, Thomas, Dr., 41542 Dormagen (DE); Braubach, Wilfried, 42659 Solingen (DE)

(57) **Zusammenfassung**

Die erfindungsgemäßen gekoppelten und mit Heteroatomen enthaltenden Gruppen modifizierten Polymeren auf Basis von konjugierten Dienen oder von konjugierten Dienen und vinylaromatischen Verbindungen, erhältlich durch Umsetzung von lebenden anionischen Polymeren auf Basis der genannten Monomeren mit funktionellen organischen Verbindungen, die mindestens 3 mit den lebenden Polymeren zur Reaktion fähige Gruppen und mindestens eine Gruppe im Molekül enthalten, welches zur Modifizierung der Polymere dienen, besitzen sehr gute Verarbeitungseigenschaften sowie verbesserte physikalische und dynamische Eigenschaften, mit dem Vorteil, dass die eingesetzten Kopplungsmittel bei der Verarbeitung keine toxische Wirkung entfalten.

Die erfindungsgemäßen Polymere sind geeignet zur Herstellung von Formkörpern aller Art, insbesondere zur Herstellung von Reifen und Reifenbauteilen, von Golfbällen und technischen Gummiartikeln sowie zur Herstellung von kautschukverstärkten Kunststoffen, wie ABS- und HIPS-Kunststoffen.

## Beschreibung

Die vorliegende Erfindung betrifft gekoppelte und mit elektrophilen Gruppen modifizierte Dien-Polymere, deren Herstellung sowie deren Verwendung.

Es ist bekannt, insbesondere für den Einsatz im Reifenbau, lebende, bevorzugt lebende Alkali-terminierte Polymere, auf Basis von konjugierten Dienen oder auf Basis von konjugierten Dienen und vinylaromatischen Verbindungen mit besonders dafür geeigneten organischen oder anorganischen Verbindungen zu verknüpfen (koppeln), wobei insbesondere die Verarbeitungseigenschaften sowie die physikalischen und dynamischen Eigenschaften, insbesondere solche, die im Zusammenhang mit dem Rollwiderstand bei Reifen stehen, verbessert werden.

Als Verknüpfungsmittel für die genannten Kautschuke werden in der Technik neben den verschiedensten organischen Verbindungen mit entsprechenden, zur Verknüpfung mit den lebenden Polymeren fähigen Gruppierungen, wie Epoxidgruppen, Isocyanatgruppen, Aldehydgruppen, Ketogruppen, Estergruppen sowie Halogenidgruppen, vor allem entsprechende Silicium- oder Zinn-Verbindungen eingesetzt, wie deren Halogenide, Sulfide oder Amine. Wir verweisen in diesem Zusammenhang beispielsweise auf DE 19 857 768 A 1, wo bekannte Verknüpfungs- bzw. Kopplungsmittel beschrieben und diskutiert und neue Epoxidgruppen-haltige organische Verknüpfungsmittel sowie damit verknüpfte Polymere vorgestellt werden. Darüber hinaus sind z.B. von Interesse EP-A 0 890 580 und EP-A 0 930 318, wo Dien-Polymere oder Copolymere beschrieben werden, die durch Zinn-Halogenide gekoppelt wurden und wie in EP-A 0 890 580 beschrieben noch zusätzlich mit Hydroxysiloxanen terminiert bzw. modifiziert wurden. In DE 19 803 039 A 1 sind Kautschuk-Zusammensetzungen für Hochleistungs-Reifen-Laufflächen beschrieben, deren zugrunde liegenden Kautschuke teilweise mit Zinn-, Phosphor-, Gallium- oder Silicium-Verbindungen gekoppelt wurden.

Weiterhin sind aus WO 01/123467A1 Kautschukmischungen bekannt, die einen Kautschuk enthalten auf Basis von konjugierten Dienen, der mit polyfunktionellen Verbindungen, welche zwei oder mehr Epoxygruppen enthalten, modifiziert wurde. Der dort beschriebene Dien-Kautschuk ist zu mehr als 60 Gew.-% mit den polyfunktionellen Verbindungen in der Endgruppe funktionalisiert. Wie u.a. aus den Tabellen der Patentanmeldung ersichtlich, fand eine Kopplungsreaktion mit den eingesetzten polyfunktionellen Verbindungen praktisch nicht statt.

In der japanischen Patentanmeldung 7 330 959-A2 werden Kautschukmischungen für Reifenlaufflächen beschrieben, welche gekoppeltes und modifiziertes in Lösung hergestelltes Styrol-Butadien-Copolymer enthalten. Das dort beschriebene Styrol-Butadien-Copolymere besitzt ein Molekulargewichtsverhältnis (M_{w}/Mn) von 2,2 bis 3,2 und ein Gewichtsmittel des Molekulargewichts (M_{w}) von ≥ 500.000.

Da die bisher verwendeten Verknüpfungsmittel zum Teil mit noch erheblichen Nachteilen verbunden sind, wie Bildung von unerwünschten Nebenprodukten bei der Kopplung, Toxizität der Verknüpfungsmittel oder nicht ausreichende Verknüpfung der Polymere mit den Kopplungsmitteln (siehe entsprechende Ausführungen in DE 19 857 768 A1), werden Verknüpfungs- bzw. Kopplungsmittel gesucht, die die Nachteile der bisher eingesetzten Kopplungs- bzw. Verknüpfungsmittel nicht aufweisen und darüber hinaus noch zusätzliche Vorteile im Verarbeitungsverhalten der hergestellten Polymere und bei den physikalischen und dynamischen Eigenschaften bei den Vulkanisaten aufweisen.

Darüber hinaus ist noch zu erwähnen, dass die in WO 01/123467 A1 und JP 7 330 959-A2 beschriebene Kautschuke zum einen praktisch keine Kopplung und daher nur einen geringen Verzweigungsgrad besitzen (WO 01/123467 A1) und zum anderen ein hohes Molekulargewicht verbunden mit einer breiten Molekulargewichtsverteilung aufweisen (JP 7 330 959-A2). Auch weisen die in den eben genannten Patentveröffentlichungen beschriebenen modifizierten bzw. gekoppelten Kautschuke kein optimales Verhältnis zwischen Verarbeitungseigenschaften der Kautschuke und den physikalischen und dynamischen Eigenschaften bei den Vulkanisaten auf.

Aufgabe der vorliegenden Erfindung war es daher, sternförmig (hoch verzweigte) verknüpfte und mit elektrophilen Gruppen modifizierte Dien-Polymere und Copolymere zur Verfügung zu stellen, die gute Verarbeitungseigenschaften verbunden mit verbesserten physikalischen und dynamischen Eigenschaften aufweisen, und die die Fähigkeit besitzen über die im Molekül vorhandenen elektrophilen Gruppen beispielsweise mit Füllstoffen in Wechselwirkung zu treten.

Darüber hinaus war es Aufgabe der vorliegenden Erfindung Dien-Polymere und Copolymere mit Kopplungs- bzw. Verknüpfungsmitteln zu koppeln, die keine toxische Wirkung entfalten und daher nicht unter besonderen Schutzmaßnahmen verarbeitet werden müssen.

Gegenstand der vorliegenden Erfindung sind daher gekoppelte und mit elektrophilen Gruppen modifizierte Polymere auf Basis von konjugierten Dienen oder von konjugierten Dienen und vinylaromatischen Verbindungen sowie polyfunktionellen Verbindungen mit mindestens drei zur Kopplung fähigen Gruppen und mindestens einer zur Modifizierung dienenden elektrophilen Gruppe, wobei die Polymere ein Molekulargewichtsverhältnis (M_{w}/Mn) von 1,0 bis 2,1, ein Gewichtsmittel des Molekulargewichts (M_{w}) von > = 50.000, eine Glasübergangstemperatur (T_{G}) von -100 bis -10°C, eine Menge an Vinylgruppen im Polymeren von 5 bis 90 %, bezogen auf die im Polymeren vorhandenen Dien-Einheiten, und eine Verknüpfungszahl (Kopplungszahl) von mindestens 2 aufweisen und wobei der Anteil an zur Modifizierung dienenden elektrophilen Gruppen, bezogen auf die Menge der bei der Herstellung des Polymeren intermediär gebildeten Alkalimetall-terminierten-Polymeranionen, 2 bis 33 mol-% beträgt.

Bevorzugt beträgt der Anteil an zur Modifizierung dienenden elektrophilen Gruppen, bezogen auf die Menge bei der Herstellung des Polymeren intermediär gebildeten Alkalimetall-terminierten-Polymeranionen 5 bis 25 mol-%, insbesondere 10 bis 25 mol-%.

Wie erwähnt, werden die erfindungsgemäßen modifizierten Polymere hergestellt durch Umsetzung von lebenden anionischen Polymeren, die üblicherweise durch entsprechende Alkalimetalle terminiert sind, mit den erfindungsgemäßen funktionellen organischen Verbindungen. Die anionische Polymerisation von ungesättigten Verbindungen ist ein weit verbreitetes Verfahren, beispielsweise zur Herstellung von entsprechenden Elastomeren und natürlich dem Fachmann geläufig. Solche anionischen Polymerisationsreaktionen mit entsprechendem theoretischen Hintergrund sind u.a. näher beschrieben in Polymer Synthesis (Paul Rempp und Erdward W. Merill) Huethig und Wepf-Verlag, Basel, Heidelberg, New York, 1986, Seite 114 bis Seite 138 sowie in Science and Technology of Rubber, second edition, (edited by: Shane E. Mark, Burak Erman und Frederick R. Eirich) Academic Press, 1994, Seite 60 bis 70. Darüber hinaus wird nochmals auf DE 198 57 768 A1 verwiesen, wo die Kopplung von lebenden Alkalimetall-terminierten Polymeren mit einem Epoxidgruppen enthaltenden Verknüpfungsmittel beschrieben wird.

Als konjugierte Diene zum Aufbau der lebenden anionischen Polymeren können alle bekannten Diene eingesetzt werden, die für die Herstellung entsprechender Polymeranionen üblich sind. Beispielsweise sind zu nennen: 1,3-Butadien, 2,3-Dimethyl-1,3-butadien, 3-Butyl-1,3-octadien, Isopren, Piperylen, 1,3-Hexadien, 1,3-Octadien, 2-Phenyl-1,3-butadien, bevorzugt 1,3-Butadien und Isopren, sowie Mischungen derselben.

Als vinylaromatische Verbindungen kommen ebenfalls die bekannten vinylaromatischen Verbindungen in Betracht, die zusammen mit den konjugierten Dienen copolymerisiert werden können. Zu nennen sind beispielsweise Styrol, p-Methylstyrol, α-Methylstyrol, 3,5-Dimethylstyrol, Vinylnaphthalin, p-tert.-Butylstyrol, Divinylstyrol, Divinylethylen, 4-Propylstyrol, p-Tolylstyrol, 1-Vinyl-5-hexylnaphthalin, 1-Vinylnaphthalin, bevorzugt Styrol, oder Mischungen derselben.

Bei der Copolymerisation der genannten konjugierten Diene mit den vinylaromatischen Verbindungen beträgt die Menge an eingesetzten vinylaromatischen Verbindungen üblicherweise 5 bis 55 Gew.-%, bevorzugt 10 bis 45 Gew.-%, und die Menge an eingesetzten konjugierten Dienen entsprechend 45 bis 95 Gew.-%, bevorzugt 55 bis 90 Gew.-%. Bei den Copolymeren kann es sich um ein statistisches, Stufenblockoder vollständiges Blockcopolymer der verschiedenen, genannten Monomeren handeln.

Die lebenden anionischen Polymeren auf Basis der genannten Monomeren sind - wie erwähnt - durch Alkalimetalle terminiert und werden in dieser Form zur Umsetzung mit den erfindungsgemäßen funktionellen organischen Verbindungen eingesetzt.

Als terminierendes Alkalimetall kommen die Alkalimetalle Lithium, Natrium, Kalium, Rubidium und Cäsium, vorzugsweise Lithium, in Betracht.

Als polyfunktionelle Verbindungen werden erfindungsgemäß organische Verbindungen eingesetzt, die mindestens drei zur Kopplung fähige Gruppen und mindestens eine zur Modifizierung dienende elektrophile Gruppe im Molekül enthalten. Dabei ist es möglich, das die zur Kopplung fähigen Gruppen mit den zur Modifizierung dienenden elektrophilen Gruppen identisch sind.

Die erfindungsgemäß einzusetzenden polyfunktionellen Verbindungen enthalten bevorzugt 3 bis 10, insbesondere 3 bis 4 Gruppen, die mit den lebenden anionischen Polymeren zur Reaktion fähig sind. Des Weiteren besitzen die polyfunktionellen Verbindungen noch 1 bis 5, bevorzugt 1 bis 3 Gruppen, welche zur Modifizierung der Polymere dienen.

Als Gruppen, die zur Kopplungsreaktion mit den lebenden anionischen Polymeren fähig sind, werden beispielsweise Epoxidgruppen, Isocyanatgruppen, Aldehydgruppen, Ketogruppen, Estergruppen, Säurechloridgruppen, Alkoxysilangruppen, Thiirangruppen, Sulfenylchloridgruppen sowie Silizium- und Zinnhalogenidgruppen genannt. Bevorzugt sind Epoxidgruppen, Aldehydgruppen, Ketogruppen, Estergruppen, Silizium- und Zinnhalogenidgruppen. Ganz besonders bevorzugt sind Epoxidgruppen.

Diese Gruppen können auch - wie oben erwähnt - zur Modifizierung der Polymere dienen.

Darüber hinaus kommen als Gruppen, die zur Modifizierung der Polymere dienen, z.B. in Betracht: tert.-Aminogruppen, Ethergruppen (symmetrisch und asymetrisch), Ammoniumgruppen, Siloxangruppen und/oder Thioethergruppen. Bevorzugt sind Aminogruppen, Ethergruppen und/oder Siloxangruppen, insbesondere Aminogruppen und/oder Ethergruppen. Diese Gruppen dienen nur zur Modifizierung der Polymeren und gehen keine Kopplungsreaktion mit den lebenden Polymeren ein.

Demnach können die einzusetzenden funktionellen organischen Verbindungen bezüglich ihrer Substituenten symmetrisch (d.h. alle Gruppen bzw. Substituenten im Molekül sind gleich) oder asymetrisch (d.h. die Gruppen besitzen ein unterschiedlichen chemischen Aufbau) aufgebaut sein.

Die obige Definition der funktionellen organischen Verbindungen bezieht sich auf die Verbindungen, wie sie vor der Kupplungsreaktion vorliegen. Das bedeutet, dass nach der Kopplungsreaktion sich zusätzliche, zur Modifizierung der Polymeren fähige Gruppen ausbilden können, beispielsweise Epoxid- in Hydroxygruppen.

Als funktionelle organische Verbindungen der genannten Art können beispielsweise folgende Verbindungen als Kopplungs- und Modifizierungsmittel eingesetzt werden:, *N*,*N*-bis-(2,3-Epoxypropoxy)-anilin, 4,4-Methylen-bis-(*N*,*N*-glycidylanilin), Tris-(2,3-epoxypropyl)-1,3,5-triazine-2,4,6-trione, Trimethylolethan-triglycidylether, Trimethylolpropan-triglycidylether oder Triglycidylglycerol, insbesondere 4,4-Methylen-bis-(*N*,*N*-glycidylanilin), Triglycidylglycerol oder *N*,*N*-bis-(2,3-Epoxypropoxy)-anilin sowie deren Gemische untereinander.

Das Verknüpfungsverhältnis und die Eigenschaften des erhaltenen verknüpften, modifizierten Polymers sind u.a. abhängig von der Menge des eingesetzten Verknüpfungsmittels. Daher ist es zweckmäßig, die günstigste Menge an Verknüpfungsmittel durch entsprechende Vorversuche zu bestimmen.

Die erfindungsgemäß gekoppelten und mit elektrophilen Gruppen modifizierten Polymere besitzen bevorzugt ein Molekulargewichtsverhältnis (M_{w}/Mn) von 1,2 bis 2,0, insbesondere 1,5 bis 2,0. Das Gewichtsmittel des Molekulargewichts (M_{w}) liegt bevorzugt im Bereich von 50.000 bis 1.000.000, insbesondere 100.000 bis 800.000. Die Menge an Vinylgruppen im Polymeren liegt bevorzugt im Bereich von 10 bis 90 Gew.-%. Die erfindungsgemäßen Polymere besitzen bevorzugt eine Verknüpfungszahl im Bereich von 2 bis 4.

Zur Herstellung der erfindungsgemäßen gekoppelten und modifizierten Polymere wird die Umsetzung der lebenden anionischen Polymere mit den erfindungsgemäßen funktionellen organischen Verbindungen in üblicher Weise in Gegenwart von inerten, aprotischen Lösungsmitteln durchgeführt. Solche inerte aprotische Lösungsmittel können paraffinische Kohlenwasserstoffe sein, wie isomere Pentane, Hexane, Heptane, Octane, Decane, 2,4-Trimethylpentan, Cyclopentan, Cyclohexan, Methylcyclohexan, Ethylcyclohexan oder 1,4-Dimethylcyclohexan, oder aromatische Kohlenwasserstoffe, wie Benzol, Toluol, Ethylbenzol, Xylol, Diethylbenzol oder Propylbenzol. Diese Lösungsmittel können einzeln oder in Kombination verwendet werden. Bevorzugt sind Cyclohexan und n-Hexan.

Gegebenenfalls kann den genannten aprotischen Lösungsmitteln bei der Copolymerisation von vinylaromatischen Verbindungen mit den konjugierten Dienen zur Steigerung der Polymerisationsgeschwindigkeit und/oder zur Modifizierung der Polymerstrukturen ein polares Lösungsmittel zugesetzt werden. Zu den geeigneten polaren Lösungsmitteln gehören Ether, wie Tetrahydrofuran, Diethylether, Cycloamylether, Dipropylether, Ethylendimethylether, Ethylendiethylether, Diethylenglykol, Dimethylether, tert.-Butoxyethoxyethan oder Bis-(2-dimethylaminoethyl)ether, vorzugsweise tert.-Butoxyethoxyethan oder Bis-(2-dimethylaminoethyl)ether, sowie tertiäre Amine, wie Trimethylamin, Triethylamin, Tripropylamin oder Tetramethylethylendiamin, vorzugsweise Triethylamin oder Tetramethylethylendiamin. Mit der Zugabe von polaren Lösungsmitteln kann zudem - wie erwähnt - die Mikrostruktur der entsprechenden Copolymerisate geändert werden, beispielsweise von Stufenblock zu statistisch. Die zur Polymerstrukturmodifizierung einzusetzenden polaren Lösungsmittel werden bei der anionischen Polymerisation im Allgemeinen in Mengen von 0,1 bis 40 mol, bevorzugt 0,1 bis 10 mol, bezogen auf ein mol des eingesetzten Initiators eingesetzt.

Die Menge an einzusetzenden Lösungsmitteln kann in weiten Bereichen variieren. Sie beträgt üblicherweise etwa 300 bis 1500 Gew.-Teile pro 100 Gew.-Teile Gesamtmonomere.

Die Herstellung der erfindungsgemäßen gekoppelten und modifizierten Polymere erfolgt im wesentlichen in zwei Schritten. Beim ersten Schritt wird ein lebendes anionisches, Alkalimetall-terminiertes Polymer hergestellt, welches im zweiten Schritt mit den vorstehend definierten, erfindungsgemäßen funktionellen organischen Verbindungen verknüpft wird. Diese organischen Verbindungen können je nach den gewünschten Eigenschaften der herzustellenden Polymeren zu jedem beliebigen Zeitpunkt der Polymerisation zugegeben werden.

Der erste Schritt zur Herstellung der erfindungsgemäßen Polymere wird im Allgemeinen so durchgeführt, dass ein Alkalimetall-Initiatorsystem mit dem jeweiligen Monomer oder den Monomeren umgesetzt wird, um die lebenden anionischen Polymere zu bilden. Dieser Polymerisationsschritt lässt sich in einem Schritt oder in einer Abfolge von Schritten durchführen. Ist die polymere Kette ein Homopolymer oder ein statisches oder Stufencopolymer aus zwei oder mehr Monomeren, so werden die Monomere gleichzeitig mit dem Alkalimetall-Initiator polymerisiert. Ist die polymere Kette ein Blockcopolymer, das zwei oder mehr Homo- oder Copolymerblöcke umfasst, so lassen sich die einzelnen Blöcke in inkrementelle oder aufeinanderfolgende Monomerzugabe erzeugen.

Die beim ersten Schritt des Verfahrens zur Herstellung der erfindungsgemäß verknüpften Polymere verwendeten Alkalimetall-basierenden Initiatorsysteme beruhen auf Alkalimetall-Verbindungen der allgemeinen Formel R¹-M, worin R¹ ein Hydrocarbonyl-Rest mit 1 bis 20 Kohlenstoffatomen und M ein aus Lithium, Natrium, Kalium, Rubidium oder Cäsium ausgewähltes Alkalimetall ist. Beispiele für derartige Lithium-Starter sind Methyllithium, Isopropyllithium, n-Butyllithium, s-Butyllithium, Isobutyllithium, tert.-Butyllithium, tert.-Octyllithium, Hexyllithium, n-Undecyllithium, Phenyllithium, Naphthyllithium, p-Tolyllithium, 4-Phenylbutyllithium, Cyclohexyllithium und 4-Cyclohexylbutyllithium. Die Menge der eingesetzten Alkalimetallverbindungen richtet sich nach den gewünschten Eigenschaften des Polymers, insbesondere nach dem gewünschten Molekulargewicht. Normalerweise werden die Alkalimetallverbindungen im Bereich von 0,2 bis 20 mmol pro 100 g Gesamtmonomere eingesetzt.

Die Polymerisationsreaktion wird in Gegenwart der zuvor erwähnten inerten aprotischen Lösungsmittel, gegebenenfalls in Abmischung mit polaren Lösungsmitteln, durchgeführt.

Die Polymerisationstemperatur kann in weiten Bereichen schwanken und liegt im allgemeinen im Bereich von 0°C bis 200°C, bevorzugt bei 40°C bis 130°C. Die Reaktionszeit schwankt ebenfalls in breiten Bereichen von einigen Minuten bis zu einigen Stunden. Üblicherweise wird die Polymerisation innerhalb einer Zeitspanne von etwa 30 Minuten bis zu 8 Stunden, bevorzugt 4 Stunden, durchgeführt. Sie kann sowohl bei Normaldruck, als auch bei erhöhtem Druck (1 bis 10 bar) durchgeführt werden.

Zur Durchführung des zweiten Reaktionsschrittes (Verknüpfungsschritt) wird die bei der Polymerisation erhaltene Polymerisationsmischung mit den genannten funktionellen organischen Verbindungen, die als Kopplungsmittel dienen, vermischt.

Bei der Kopplungsreaktion ist darauf zu achten, dass störende Verbindungen, die die Kopplungsreaktion beeinträchtigen könnten, nicht vorhanden sind. Solche störenden Verbindungen sind z.B. Kohlendioxid, Sauerstoff, Wasser, Halogenide, Alkohole, organische und anorganische Säuren.

Die Kopplungsreaktion wird üblicherweise bei Temperaturen durchgeführt, die in etwa den Temperaturen der Polymerisationsreaktion entsprechen. Dies bedeutet, dass die Verknüpfungsreaktion bei Temperaturen von etwa 0°C bis 200°C, vorzugsweise 50°C bis 120°C durchgeführt wird. Die Verknüpfungsreaktion kann ebenfalls bei Normaldruck als auch bei erhöhtem Druck (1 bis 10 bar) durchgeführt werden.

Die Reaktionszeit der Kopplungsreaktion ist relativ kurz. Sie liegt im Bereich von etwa 1 Minute bis etwa 1 Stunde.

Erfindungsgemäß werden etwa 0,03 bis 0,33 mol, bevorzugt 0,1 bis 0,26 mol an polyfunktionellen organischen Verbindungen pro mol Alkalimetall-terminierten Polymeranionen für die Kopplungsreaktion eingesetzt.

Nach der Verknüpfungsreaktion werden die nunmehr erhaltenen gekoppelten und modifizierten Polymere gewonnen, indem man die Reaktionsmischung mit Abbruchreagenzien - wie oben erwähnt - behandelt, die aktiven Wasserstoff enthalten, wie Alkohole oder Wasser oder entsprechende Gemische. Darüber hinaus ist es von Vorteil, wenn der Reaktionsmischung Antioxidantien zugesetzt werden, bevor das verknüpfte Polymer isoliert wird.

Die Abtrennung des erfindungsgemäßen Polymeren erfolgt in üblicher Weise etwa durch Wasserdampfdestillation oder Ausflockung mit einem geeigneten Ausflockungsmittel, wie Alkoholen. Das ausgeflockte Polymer wird dann beispielsweise durch Zentrifugieren oder Extrudieren aus dem resultierenden Medium entfernt. Restliches Lösungsmittel und andere flüchtige Bestandteile lassen sich durch Erwärmen, gegebenenfalls unter vermindertem Druck oder in einem Gebläseluftstrom, aus dem isolierten Polymer entfernen.

Die Herstellung der erfindungsgemäßen Polymere kann sowohl in diskontinuierlicher als auch in kontinuierlicher Fahrweise erfolgen. Bevorzugt ist die kontinuierliche Fahrweise in einer Reaktorkaskade, bestehend aus mehreren, bevorzugt mindestens 2, insbesondere 2 bis 4, in Reihe geschalteten Reaktoren.

Ein weiterer Gegenstand der vorliegenden Erfindung ist daher ein Verfahren zur Herstellung von gekoppelten und mit elektrophilen Gruppen modifizierten Polymeren auf Basis von konjugierten Dienen oder von konjugierten Dienen und vinylaromatischen Verbindungen sowie von polyfunktionellen Verbindungen mit mindestens drei zur Kopplung fähigen Gruppen und mindestens einer zur Modifzierung dienenden elektrophilen Gruppe mit den zuvor genannten physikalischen Parametern, das dadurch gekennzeichnet ist, dass man konjugierte Diene oder konjugierte Diene mit vinylaromatischen Verbindungen in Gegenwart von inerten organischen Lösungsmitteln und in Anwesenheit von organischen Alkalimetall-Verbindungen in üblicher Weise polymerisiert, die gebildeten Alkalimetall-terminierten Polymeranionen mit polyfunktionellen Verbindungen, mit mindestens drei zur Kopplung fähigen Gruppen und mindestens einer zur Modifizierung dienenden elektrophilen Gruppe umsetzt, wobei das molare Verhältnis von eingesetzten polyfunktionellen Verbindungen zur Akalimetall-terminierten Polymeranionen 0,03 bis 0,33 : 1 beträgt.

Selbstverständlich können den erfindungsgemäßen Polymeren noch die üblichen Compoundierkomponenten, wie Füllstoffe, Farbstoff, Pigmente, Erweichungsmittel und Verstärkungsmittel, zugesetzt werden. Darüber hinaus die bekannten Kautschukhilfsmittel und Vernetzungsmittel, wie in "Handbuch für die Gummiindustrie", 2. Ausgabe, 1991, Herausgeber: Bayer AG, beschrieben. Darüber hinaus ist es ebenfalls möglich, in bekannter Weise die erfindungsgemäßen Polymeren mit bekannten Kautschuken abzumischen, um besondere Eigenschaftsprofile für die herzustellenden Kautschukformkörper zu erzielen.

Die erfindungsgemäßen gekoppelten und modifizierten Polymere können in bekannter Weise zur Herstellung von Vulkanisaten bzw. Kautschukformkörpern aller Art verwendet werden, insbesondere zur Herstellung von Reifen und Reifenbauteilen, von Golfbällen und anderen technischen Gummiartikeln, als auch zur Herstellung von kautschukverstärkten Kunststoffen, wie ABS- und HIPS-Kunststoffen.

### Beispiele

### Beispiele 1

### a) Herstellung eines anionischen Lithium-termininierten Styrol-Butadien-Copolymers:

In einem mit Stickstoff gespülten und mit einem Rührer versehenen Autoklaven wurden 8.500 g technisches Hexan vorgelegt. Danach wurde unter Rühren zu dem vorgelegten Hexan 90mmol tert.-Butoxy-ethoxy-ethan, 0,80 mmol Kalium-tert.-amylat und 12 mmol n-Butyllithium (Buli) gegeben. Zu diesem Gemisch wurde dann 1125 g getrocknetes, destabilisiertes 1,3-Butadien und 375 g getrocknetes, destabilisiertes Styrol zudosiert. Die Polymerisation der Monomere wurde bei einer Temperatur von 70°C bis zum quantitativen Umsatz des Monomers durchgeführt.

### b) Kopplung des gemäß a) hergestellten Copolymers

Das in a) erhaltene Polymer wurde direkt - in situ - mit
1) 4 mmol *N*,*N*-Bis-(2,3-epoxypropyl)-4-(2,3-epoxypropoxy)anilin (Kopplungsmittel 1) oder
2) 3 mmol 4,4-Methylen-bis-(*N*,*N*-diglycidylanilin) (Kopplungsmittel 2) oder
3) 4 mmol Triglycidylglycerol (Kopplungsmittel 3)
versetzt und das Gemisch bei einer Temperatur von ca. 70°C etwa 1 Stunde gerührt. Danach wurde der Reaktorinhalt abgekühlt und die Reaktion mit Ethanol abgestoppt. Das erhaltene Produkt wurde anschließend mit Vulkanox® BHT stabilisiert und bei 60°C im Trockenschrank getrocknet.

Molares Verhältnis von Kopplungsmittel zu Li-terminiertem Polymer:
1) 0,33 mol (Kopplungsmittel 1): 1 mol (Polymer)
2) 0,253 mol (Kopplungsmittel 2): 1 mol (Polymer)
3) 0,33 mol (Kopplungsmittel 3): 1 mol (Polymer)

Die angegebenen Molverhältnisse beziehen sich auf vollständige Kopplung.

### Vergleichsbeispiel

Die Herstellung des nicht gekoppelten und nicht modifizierten Styrol-Butadien-Copolymers erfolgte wie in Beispiel la) beschrieben. Die anschließende Kopplung des hergestellten Copolymers erfolgte direkt - in situ - mit 6 mmol *N*,*N*-Diglycidylanilin (Kopplungsmittel 4). Die Reaktionszeiten der Kopplung sowie die Aufarbeitung der Polymere erfolgte wie unter 1b) beschrieben.

Molares Verhältnis von Kopplungsmittel zu Li-terminiertem Polymer:
4) 0,5 mol (Kopplungsmittel 4): 1 mol (Polymer)

Das angegebene Molverhältnis bezieht sich ebenfalls auf die vollständige Kopplung mit dem Polymer.

Das mit dem Kopplungsmittel 4 gekoppelte SBR-Copolymer wird in den nachstehenden Tabellen als Referenz bezeichnet.

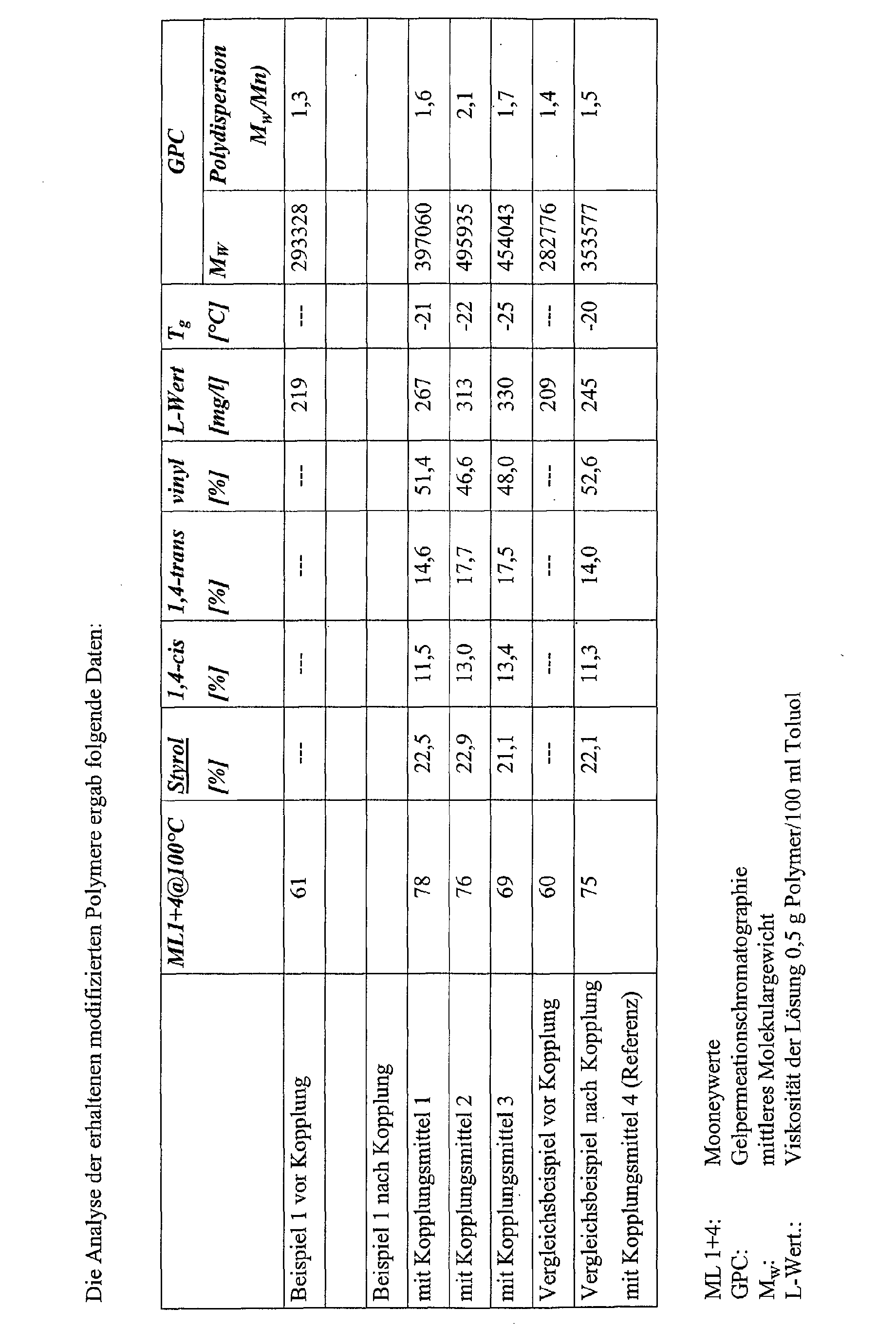

### Kautschukmischungen mit verschieden gekoppelten Polymeren

| Rußmischungen | | | | |
|---|---|---|---|---|
| | Beispiel 2 | Beispiel 1 | Beispiel 3 | Referenz |
| | | | | |
| Polymer mit Kopplungsmittel 2 | 60 | | | |
| Polymer mit Kopplungsmittel 1 | | 60 | | |
| Polymer mit Kopplungsmittel 3 | | | 60 | |
| Referenz | | | | 60 |
| Buna CB 25 | 40 | 40 | 40 | 40 |
| Ruß N 234 | 50 | 50 | 50 | 50 |
| Mineralöl* | 5 | 5 | 5 | 5 |
| ZnO RS | 3 3 3 | | | 3 |
| Stearinsäure | 2 | 2 | 2 | 2 |
| Antilux 654** | 1,5 | 1,5 | 1,5 | 1,5 |
| Vulkanox HS**** | 1 | 1 | 1 | 1 |
| Vulkanox 4020*** | 1 | 1 | 1 | 1 |
| Vulkacit CZ****** | 1,4 | 1,4 | 1,4 | 1,4 |
| Vulkacit D******* | 0,3 | 0,3 | 0,3 | 0,3 |
| Schwefel | 1,8 | 1,8 | 1,8 | 1,8 |

| **Mischungseigenschaften,** **DIN 53523** | | | | |
|---|---|---|---|---|
| ***Mooney Viskosität ML1*+*4@100°C*** | 74 | 81 | 87 | 78 |
| | | | | |

| ***Vulkanisateigenschaften, ISO 37*** | | | | |
|---|---|---|---|---|
| Festigkeit, Mpa | 19 | 21,5 | 20 | 19,3 |
| Bruchdehnung, % | 420 | 435 | 400 | 405 |
| Spannungswert 100%, Mpa | 2,8 | 2,6 | 2,6 | 2,6 |
| Spannungswert 300%, Mpa | 14,7 | 13,1 | 13,6 | 12,5 |
| Verstärkungsgrad | 5,3 | 5,0 | 5,2 | 4,8 |
| Härte 23°C, Shore A | 67 | 67 | 66 | 67 |
| Härte 70°C, Shore A | 64 | 63 | 65 | 63 |
| Elastizität 23°C, % | 44 | 42 | 48 | 42 |
| Elastizität 70°C, % | 60 | 58 | 59 | 57 |

| **Roelig, 10 HZ, DIN 53513** | | | | |
|---|---|---|---|---|
| tan delta 60°C | 0,133 | 0,133 | 0,124 | 0,137 |

Die erfindungsgemäßen Polymere mit Kopplungsmittel 1, 2 und 3 zeigen gegenüber dem Referenz-Polymer (Referenz) in typischen rußgefüllten Vulkanisaten für Reifenlaufflächen deutliche Vorteile im Verstärkungsgrad, der die Wechselwirkung des Polymeren mit dem Füllstoff veranschaulicht. Als Konsequenz führt dies zu einer Erhöhung der Elastizität insbesondere bei hohen Temperaturen (70°C) und zu einer Absenkung des tan delta nach Roelig bei 60°C, was der Fachmann mit einer Reduktion des Rollwiderstandes entsprechend hergestellter Reifen gleichsetzt.

| **Kieselsäuremischungen** | | | | |
|---|---|---|---|---|
| | Beispiel 2 | Beispiel 1 | Beispiel 3 | Referenz |
| | | | | |
| Polymer mit Kopplungsmittel 2 | 70 | | | |
| Polymer mit Kopplungsmittel 1 | | 70 | | |
| Polymer mit Kopplungsmittel 3 | | | 70 | |
| Referenz | | | | 70 |
| Buna CB 25 | 30 | 30 | 30 | 30 |
| Mineralöl* | 37,5 | 37,5 | 37,5 | 37,5 |
| Vulkasil S******** | 80 | 80 | 80 | 80 |
| Silan Si 69********* | 6,4 | 6,4 | 6,4 | 6,4 |
| ZnO RS | 2,5 | 2,5 | 2,5 | 2,5 |
| Stearinsäure | 1 | 1 | 1 | 1 |
| Vulkanox HS**** | 1 | 1 | 1 | 1 |
| Vulkanox 4020*** | 1 | 1 | 1 | 1 |
| Vulkacit CZ****** | 1,8 | 1,8 | 1,8 | 1,8 |
| Vulkacit D******* | 2 | 2 | 2 | 2 |
| Schwefel | 1,5 | 1,5 | 1,5 | 1,5 |

| **Mischungseigenschaften,** **DIN 53523** | | | | |
|---|---|---|---|---|
| ***Mooney Viskosität* ML1+4@100°C** | 73,5 | 83,8 | 90 | 79,4 |
| | | | | |
| ***Vulkanisateigenschaften, ISO 37*** | | | | |
| Festigkeit, Mpa | 18,5 | 17,5 | 18,1 | 17,4 |
| Bruchdehnung, % | 436 | 430 | 430 | 435 |
| Spannungswert 100%, Mpa | 3,0 | 2,8 | 2,9 | 3,1 |
| Spannungswert 300%, Mpa | 11,3 | 10,6 | 10,8 | 10,4 |
| Verstärkungsgrad | 3,8 | 3,8 | 3,7 | 3,4 |
| Härte 23°C, Shore A | 75 | 75 | 75 | 76 |
| Härte 70°C, Shore A | 70 | 71 | 72 | 70 |
| Elastizität 23°C, % | 34 | 32 | 39 | 32 |
| Elastizität 70°C, % | 54 | 54 | 56 | 54 |

| **Roelig, 10 HZ, DIN 53513** | | | | |
|---|---|---|---|---|
| tan delta -20°C | 0,457 | 0,415 | 0,462 | 0,382 |
| 60°C | 0,127 | 0,127 | 0,112 | 0,129 |

* Enerthene 1849-1, Mineralölweichmacher, Mobil Schmierstoff GmbH
** Lichtschutzwachs, Rhein Chemie Rheinau
*** Alterunsschutzmittel (6PPD), Bayer AG
**** Alterungsschutzmittel (TMQ), Bayer AG
****** Sulfenamid Beschleuniger (CBS), Bayer AG
******* Guanidin Beschleuniger (DPG), Bayer AG
******** Kieselsäure, Bayer AG
********* Silan, Degussa

In mit Kieselsäure gefüllten Vulkanisaten zeigen die erfindungsgemäßen Polymere ebenfalls eine verbesserte Wechselwirkung mit dem Füllstoff, ausgedrückt durch erhöhte Verstärkungsgrade. Zusätzlich zu reduziertem Rollwiderstand (niedrigerer tan delta bei 60°C) sind mit dieser Art Laufflächenmischungen die Nässeeigenschaften daraus hergestellter Reifen verbessert (erhöhter tan delta bei -20°C).

## Patentansprüche

1. Gekoppelte und mit elektrophilen Gruppen modifizierte Polymere auf Basis von konjugierten Dienen oder von konjugierten Dienen und vinylaromatischen Verbindungen sowie polyfunktionellen Verbindungen mit mindestens drei zur Kopplung fähigen Gruppen und mindestens einer zur Modifizierung dienenden elektrophilen Gruppe, wobei die Polymeren ein Molekulargewichtsverhältnis (M_{w}/Mn) von 1,0 bis 2,1, einem Gewichtsmittel des Molekulargewichts (M_{w}) von ≥ 50.000, einer Glasübergangstemperatur (T_{G}) von -100 bis -10°C, einer Menge an Vinylgruppen in Polymeren von 5 bis 90 %, bezogen auf die im Polymeren vorhandenen Dieneinheiten und eine Verknüpfungszahl (Kopplungszahl) von mindestens 2 aufweisen und wobei der Anteil an zur Modifizierung dienenden elektrophilen Gruppen, bezogen auf die Menge der bei der Herstellung des Polymeren intermediär gebildeten Alkalimetall-terminierten-Polymeranionen, 3 bis 33 mol-% beträgt.

2. Gekoppelte und modifizierte Polymere nach Anspruch 1, **dadurch gekennzeichnet, dass** sie als vinylaromatische Verbindungen Styrol, p-Methylstyrol, α-Methylstyrol, 3,5-Dimethylstyrol, Vinylnaphthalin, p-tert.-Butylstyrol, Divinylstyrol, Divinylethylen, 4-Propylstyrol, p-Tolylstyrol, 1-Vinyl-5-hexylnaphthalin und/oder 1-Vinylnaphthalin enthalten.

3. Gekoppelte und modifizierte Polymere nach Anspruch 1, **dadurch gekennzeichnet, dass** sie als konjugierte Diene 1,3-Butadien und/oder Isopren und als vinylaromatische Verbindung Styrol enthalten.

4. Gekoppelte und modifizierte Polymere nach Anspruch 1, **dadurch gekennzeichnet, dass** sie die konjugierten Diene in Mengen von 45 bis 95 Gew.-% und die vinylaromatischen Verbindungen in Mengen von 5 bis 55 Gew.-% enthalten.

5. Gekoppelte und modifizierte Polymere nach Anspruch 1, **dadurch gekennzeichnet, dass** sie als funktionelle organische Verbindungen *N,N*-bis-(2,3-Epoxypropoxy)-anilin, 4,4-Methylen-bis-(*N*,*N*-glycidylanilin), Tris-(2,3-epoxypropyl)-1,3,5-triazine-2,4,6-trione, Trimethylolethan-triglycidylether, Trimethylolpropan-triglycidylether oder Triglycidylglycerol.

6. Verfahren zur Herstellung von gekoppelten und mit elektrophilen Gruppen modifizierten Polymeren nach Anspruch 1, **dadurch gekennzeichnet, dass** man konjugierte Diene oder konjugierte Diene mit vinylaromatischen Verbindungen in Gegenwart von inerten organischen Lösungsmitteln und in Anwesenheit von organischen Alkalimetall-Verbindungen in üblicher Weise polymerisiert, die gebildeten Alkalimetall-terminierten Polymeranionen mit polyfunktionellen Verbindungen, mit mindestens drei zur Kopplung fähigen Gruppen und mindestens einer zur Modifizierung dienenden elektrophilen Gruppe umsetzt, wobei das molare Verhältnis von eingesetzten polyfunktionellen Verbindungen zur Akalimetall-terminierten Polymeranionen 0,03 bis 0,33 : 1 beträgt.

7. Verwendung der gekoppelten und modifizierten Polymere nach Anspruch 1, zur Herstellung von Vulkanisaten und Kautschukformkörpern aller Art, insbesondere zur Herstellung von Reifen und Reifenbauteilen, von Golfbällen und technischen Gummiartikeln sowie zur Herstellung von kautschukverstärkten Kunststoffen wie ABS- und HIPS-Kunststoffen.
